# EUROPÄISCHE PATENTSCHRIFT

(11) **EP 3 971 407 B1**
(45) Veröffentlichungstag und Bekanntmachung des Hinweises auf die Patenterteilung: **05.03.2025**
(21) Anmeldenummer: 21191894.1
(22) Anmeldetag: 18.08.2021
(51) Int. Cl.: F02K 9/66

(54) **BRENNKAMMER MIT SCHWINGUNGSDÄMPFENDER INNENWANDFORM UND VERFAHREN ZUM HERSTELLEN EINES BRENNKAMMERABSCHNITTS**
COMBUSTION CHAMBER WITH VIBRATION-DAMPING INNER WALL AND METHOD FOR MANUFACTURING A COMBUSTION CHAMBER SECTION
CHAMBRE DE COMBUSTION POURVU DE FORME DE PAROI INTÉRIEURE À AMORTISSEMENT DE VIBRATIONS ET PROCÉDÉ DE FABRICATION D'UNE SECTION DE CHAMBRE DE COMBUSTION

(30) Priorität: 21.09.2020 DE 102020124542
(43) Veröffentlichungstag der Anmeldung: 23.03.2022
(73) Patentinhaber: ArianeGroup GmbH, 82024 Taufkirchen (DE)
(72) Erfinder: Maeding, Chris Udo, 85716 Unterschleißheim (DE)
(74) Vertreter: Schornack, Oliver

(56) Entgegenhaltungen:
- DE-A1- 2 132 915
- DE-C- 570 511
- JP-A- 2005 226 586
- US-A- 2 476 185

## Beschreibung

Die Erfindung betrifft eine Brennkammer mit schwingungsdämpfender Innenwandform sowie ein Raketentriebwerk mit solch einer Brennkammer, und ein Verfahren zum Herstellen einer solchen Brennkammer sowie einen Computer-lesbaren Datenträger mit Instruktionen zur Durchführung des Herstellverfahrens. Insbesondere betrifft die Erfindung eine Brennkammer, mit einem Brennkammerkörper, der mindestens einen Abschnitt aufweist, dessen Innenseite näher an einem Querschnittszentrum des Brennkammerkörpers liegt als ein anderer Abschnitt des Brennkammerkörpers. Ferner werden ein Raketentriebwerk mit solch einem Brennkammerabschnitt und ein Schichtaufbauverfahren zum Herstellen einer solchen Brennkammer sowie ein Computer-lesbarer Datenträger mit Instruktionen zum Durchführen des Schichtaufbauverfahrens beschrieben.

Brennkammern von Flüssigraketentriebwerken dienen der effizienten Verbrennung der jeweiligen Treibstoffpaarung bestehend aus Oxidator und Brennstoff. Hierfür werden die Treibstoffkomponenten über ein spezielles Einspritzsystem der Kammer zugeführt. In der Kammer erfolgt dann, in Abhängigkeit von den jeweiligen Betriebszuständen, die Verdampfung, Durchmischung sowie chemische Umsetzung und die beginnende Umwandlung in kinetische Energie, deren Hauptzuwachs im Bereich eines subsonischen und supersonischen Düsenbereichs liegt. Die Strömung im Bereich der Brennkammer ist von turbulenter Durchmischung gekennzeichnet. Für einen zuverlässigen Betrieb des Raketentriebwerks ist eine hohe Verbrennungsstabilität erstrebenswert.

Ferner ist insbesondere im Bereich der Heißgaswände (Innenwände der Brennkammer und Schubdüse) eine Kühlung notwendig. So kann beispielsweise bei einer Regenerativkühlung die hohe Wärmeentwicklung über Kühlmittelkanäle in den Heißgaswänden, durch die mindestens eine Treibstoffkomponente strömt, abgedämpft werden. Solche Kühlmittelkanäle sind beispielsweise in der JP 2005-226586, US 2,476,185 und DE 570 511 gezeigt, wobei sie in der US 2,476,185 spiralförmig innenseitig im Brennkammerraum angeordnet sind.

Aus den verschiedenen Formen für Brennkammern, wie zum Beispiel kugelförmig, birnenförmig, konisch, zylindrisch oder auch in Form einer Ringbrennkammer, hat sich die zylindrische Brennraumkonfiguration durchgesetzt. Insbesondere in der Fertigung weist eine zylindrische Brennkammer Vorteile auf. Jedoch weisen Brennkammern mit rundem Querschnitt eine erhöhte Anfälligkeit hinsichtlich hochfrequenter Schwingungen, insbesondere transversale Schwingungsmoden auf, welche den Eigenfrequenzen dieser Bauformen entsprechen. Diese transversalen Schwingungen, also Schwingungsausbreitung in Radialrichtung der runden Brennkammer, führt zu einer zusätzlichen Energiefreisetzung in der Brennkammer mit einhergehender Überhitzung. Ferner ist eine starke Druckfluktuation zu verzeichnen.

Um diesen Schwingungen entgegenzuwirken oder sie zu vermeiden, wurden an der Kopfplatte (oder Einspritzplatte) der Brennkammer Leitbleche (in der englischen Fachsprache auch als "baffle" bezeichnet) angeordnet, wie sie zum Beispiel in der JP 2005-226586 dargestellt sind. In der DE 10 2016 209 650 A1 wird vorgeschlagen, anstatt Leitblechen eine bestimmte Anzahl von Koaxial-Einspritzelementen an der Kopfplatte mit einem zentralen Hülsenkörper vorzusehen, der weiter von der Kopfplatte ins Innere der Brennkammer hervorsteht als die übrigen Einspritzelemente. Die dadurch erzielte axiale Staffelung der Flammenfront in der Brennkammer reduziert oder verhindert die Bildung und/oder die Ausbreitung von Schwingungen in ähnlicher Weise wie Leitbleche.

Vor diesem Hintergrund liegt der vorliegenden Erfindung die Aufgabe zugrunde, eine Brennkammer mit verbesserter Verbrennungsstabilität zu schaffen.

Diese Aufgabe wird durch eine Brennkammer mit den Merkmalen des Anspruchs 1, ein Raketentriebwerk mit den Merkmalen des Anspruchs 10 sowie ein Verfahren mit den Merkmalen des Anspruchs 11 und einem entsprechenden Datenträger mit Instruktionen gemäß Anspruch 13 gelöst.

Gemäß einem ersten Aspekt zum besseren Verständnis der vorliegenden Offenbarung umfasst eine Brennkammer für ein Raketentriebwerk einen Brennkammerkörper, der ein Brennkammervolumen umschließt, und einen sich in Längsrichtung der Brennkammer verjüngenden Düsenteil, der an den Brennkammerkörper anschließt. Der Brennkammerkörper ist beispielsweise an einer dem Düsenteil gegenüberliegenden Seite an einen Einspritzkopf angeschlossen. Das Brennkammervolumen dient also in erster Linie der Vermischung und Verbrennung der Treibstoffkomponenten.

Der Brennkammerkörper weist mindestens einen ersten Abschnitt und ferner einen zweiten Abschnitt auf, wobei eine dem Brennkammervolumen zugewandte Innenseite des mindestens einen ersten Abschnitts näher an einem Querschnittszentrum des Brennkammerkörpers liegt als eine Innenseite des zweiten Abschnitts des Brennkammerkörpers. Mit anderen Worten liegt die Innenseite des mindestens einen ersten Abschnitts weiter im Inneren des Brennkammervolumens als die Innenseite des zweiten Abschnitts und verringerte somit das Brennkammervolumen in diesem Bereich des Brennkammerkörpers. Bei dem mindestens einen ersten Abschnitt kann es sich um eine beliebige Anzahl von Abschnitten oder Bereichen des Brennkammerkörpers handeln, die lokal ein kleineres Brennkammervolumen begrenzen als im Bereich des zweiten Abschnitts. Bei dem zweiten Abschnitt handelt es sich um alle übrigen Abschnitte oder Bereiche des Brennkammerkörpers, die nicht zu dem mindestens einen ersten Abschnitt zählen. Auch handelt es sich bei dem zweiten Abschnitt um einen gleichmäßig geformten Körper handeln, der an der dem Brennkammervolumen zugewandten Innenseite in jedem der Bereiche des mindestens einen ersten Abschnitts eine (in das Brennkammervolumen hineinreichende) Ausbuchtung aufweist.

Durch diese spezielle Form der Innenseite des Brennkammerkörpers wird das Brennkammervolumen in verschiedene Bereiche unterteilt. Diese Unterteilung wirkt der Entstehung und/oder Ausbreitung von Schwingungen, insbesondere transversalen Schwingungen, entgegen. Ähnlich zu am Einspritzkopf angeordneten Leitblechen wird das Brennkammervolumen unterteilt, insbesondere bei der Betrachtung eines Querschnitts des Brennkammerkörpers, sodass die Ausbreitung von Schwingungen gedämpft oder verhindert wird. Dies erhöht die Verbrennungsstabilität des Raketentriebwerks.

Beispielsweise können mehrere erste Abschnitte des Brennkammerkörpers vorgesehen sein und jeweils dort angeordnet werden, wo sich üblicherweise ein Leitblech befinden würde. Durch die spezielle Form des Brennkammerkörpers weist die Brennkammer keine bevorzugten Eigenfrequenzen auf, sodass die Schwingungsproblematik nicht auftritt oder zumindest stark verringert ist.

In einer Ausgestaltungsvariante kann sich ein Abstand der Innenseite des mindestens einen ersten Abschnitts zum Querschnittszentrum des Brennkammerkörpers in Längsrichtung und/oder in Umfangsrichtung des Brennkammerkörpers von einem Minimum kontinuierlich bis zu einem Abstand der Innenseite des zweiten Abschnitts des Brennkammerkörpers zum Querschnittszentrum des Brennkammerkörpers vergrößern. Beispielsweise kann die Innenseite des mindestens einen ersten Abschnitts eine runde dreidimensionale Form einnehmen. Durch die Vermeidung scharfer Kanten, wie sie bei Leitblechen teilweise vorkommen, können starke Temperaturgradienten und/oder Wirbel in der Strömung vermieden werden und somit Bereiche mit Temperaturspitzen in dem Brennkammerkörper vermieden werden.

Durch den kontinuierlichen Oberflächenverlauf der Innenseite des mindestens einen ersten Abschnitts kann auch ein für die Strömung der Verbrennungsgase optimiertes Brennkammervolumen bereitgestellt werden. Somit lassen sich die Vorteile von Leitblechen direkt im Brennkammerkörper verwirklichen, während zudem die Strömung in Längsrichtung des Brennkammerkörpers (in Strömungsrichtung der Verbrennungsgase) verbessert wird. Beispielsweise kann es in den Kantenbereichen von Leitblechen zu Verwirbelungen kommen, die bei dem hier offenbarten Brennkammerkörper nicht oder nur sehr gering vorkommen.

Das Querschnittszentrum des Brennkammerkörpers kann einem Schwerpunkt des Querschnitts des Brennkammerkörpers entsprechen. Der Querschnitt liegt in einer (Querschnitts-) Ebene im Wesentlichen senkrecht zu einer Längsrichtung der Brennkammer, die der Strömungsrichtung der Verbrennungsgase entspricht. Der Abstand der Innenseite des mindestens einen ersten Abschnitts bzw. des zweiten Abschnitts zu dem Querschnittszentrum wird in der Querschnittsebene gemessen. Das Minimum ist somit der kürzeste Abstand zwischen Querschnittszentrum und einem beliebigen Punkt auf der Schnittlinie der Innenseite des ersten Abschnitts mit der Ebene.

In einer weiteren Ausgestaltungsvariante kann das Minimum des Abstands der Innenseite des mindestens einen ersten Abschnitts zum Querschnittszentrum des Brennkammerkörpers entlang einer sich in Längsrichtung und/oder in Umfangsrichtung des Brennkammerkörpers erstreckenden Linie angeordnet sein. Bei Betrachtung in Umfangsrichtung, die vorzugsweise in der Querschnittsebene liegt, ist das Minimum somit nicht auf einen einzelnen Punkt beschränkt, sondern kann auch eine Kreisbogenlinie mit gleichen Abständen zum Querschnittszentrum darstellen. In Längsrichtung des Brennkammerkörpers betrachtet kann der erste Abschnitt in mehreren nebeneinanderliegenden Querschnittsebenen jeweils einen Punkt oder eine Linie aufweisen, die einen minimalen Abstand zum Querschnittszentrum haben. Das Minimum kann also ein einzelner Punkt, eine Linie aber auch eine Fläche sein, wo die Innenwand/Innenseite des ersten Abschnitts am nächsten zum Querschnittszentrum liegt, also am stärksten das Brennkammervolumen verkleinert. Diese Linie oder Fläche muss nicht geradlinig verlaufen, sondern kann in Längsrichtung und/oder in Umfangsrichtung des Brennkammerkörpers verlaufen.

Durch diese spezielle Form des ersten Abschnitts des Brennkammerkörpers kann das Brennkammervolumen für die Strömung der Verbrennungsgase optimiert werden. Insbesondere kann die Größe des ersten Abschnitts in Längsrichtung und/oder in Umfangsrichtung des Brennkammerkörpers an die eingesetzten Verbrennungsgase, und somit die chemische Reaktion, sowie die optimale Durchmischung angepasst werden. Dabei kann auch die mittlere lokale Machzahl im jeweiligen Bereich des Brennkammervolumens bei der Wahl der Größe des ersten Abschnitts und/oder der Wahl der Größe des Minimums Berücksichtigung finden. Auch lassen sich Schwingungen in Längsrichtung des Brennkammerkörpers (longitudinale Schwingungen) dämpfen oder verhindern.

In einer noch weiteren Ausgestaltungsvariante kann mindestens ein Querschnitt des Brennkammerkörpers rotationssymmetrisch sein und das Querschnittszentrum des Brennkammerkörpers der Drehpunkt der Rotationssymmetrie sein. Unter rotationssymmetrisch ist hier nicht der spezielle Fall eines Kreises gemeint, sondern (in Umfangsrichtung betrachtet) die Anordnung mehrerer erster Abschnitte und dazwischen liegend der zweite Abschnitt, wobei jeder erste Abschnitt in dem Querschnitt in einem festgelegten Winkel um den Drehpunkt der Rotationssymmetrie wiederkehrt. Somit liegt eine N-fache Rotationssymmetrie vor, wobei N die Anzahl der ersten Abschnitte in dem Querschnitt ist.

In einer anderen Ausgestaltungsvariante kann sich der mindestens eine erste Abschnitt des Brennkammerkörpers in Längsrichtung des Brennkammerkörpers in einem Bereich des Brennkammerkörpers befinden, der ein kopfseitiges Ende des Brennkammerkörpers bildet. Das kopfseitige Ende des Brennkammerkörpers ist das Ende, an dem der Einspritzkopf an die Brennkammer angeschlossen wird. Somit entspricht die Anordnung des mindestens einen ersten Abschnitts in etwa der Lage von Leitblechen bei herkömmlichen Brennkammern.

Alternativ oder zusätzlich kann sich der mindestens eine erste Abschnitt des Brennkammerkörpers in Längsrichtung des Brennkammerkörpers in einem Bereich des Brennkammerkörpers befinden, der ein düsenseitiges Ende des Brennkammerkörpers benachbart zu dem Düsenteil bildet. Das düsenseitige Ende des Brennkammerkörpers ist dem kopfseitigen Ende gegenüberliegend (in Längsrichtung des Brennkammerkörpers betrachtet).

Alternativ oder zusätzlich kann sich der mindestens eine erste Abschnitt des Brennkammerkörpers in Längsrichtung des Brennkammerkörpers in einem Bereich des Brennkammerkörpers befinden, der einen Mittelbereich zwischen dem kopfseitigen Ende und dem düsenseitigen Ende des Brennkammerkörpers bildet. Somit kann das kopfseitige Ende und das düsenseitige Ende des Brennkammerkörpers eine übliche Form (insbesondere einen üblichen Querschnitt) einer Brennkammer einnehmen, während in Längsrichtung des Brennkammerkörpers betrachtet im Mittelbereich Verengungen des Brennkammervolumens durch den mindestens einen ersten Abschnitt angeordnet sind.

Weiterhin alternativ kann sich der mindestens eine erste Abschnitt des Brennkammerkörpers in Längsrichtung des Brennkammerkörpers über den gesamten Brennkammerkörper erstrecken.

In einer weiteren Ausgestaltungsvariante kann der Brennkammerkörper eine gerade Anzahl von ersten Abschnitten umfassen. Dadurch ergibt sich ein besonders symmetrischer und damit stabiler Brennkammerkörper.

Alternativ oder zusätzlich können in Längsrichtung des Brennkammerkörpers mindestens zwei erste Abschnitte in dem Brennkammerkörper angeordnet sein. Die beiden ersten Abschnitte oder die mehreren ersten Abschnitte können entlang einer Geraden angeordnet sein, die parallel zur Längsrichtung des Brennkammerkörpers verläuft. Alternativ können die mehreren ersten Abschnitte auch entlang einer Kurvenbahn angeordnet sein, wobei die Kurvenbahn an einer virtuellen Innenseite eines Grundkörpers des Brennkammerkörpers, der durch den zweiten Abschnitt definiert ist, verläuft.

In noch einer weiteren Ausgestaltungsvariante kann die Brennkammer ferner einen sich in Längsrichtung der Brennkammer erstreckenden zylindrischen Abschnitt umfassen. Insbesondere die Innenseite der Brennkammer weist in dem zylindrischen Abschnitt eine zylindrische Form auf. Mit anderen Worten kann ein Teil der Brennkammer in üblicher Bauform (zylindrisch) hergestellt sein, während in Längsrichtung der Brennkammer betrachtet lediglich ein bestimmter Teil durch den Brennkammerkörper mit der speziellen Form, die durch den mindestens einen ersten Abschnitt und dem zweiten Abschnitt definiert ist, hergestellt wird. Beispielsweise kann der zylindrische Abschnitt an den Düsenteil angrenzen, wodurch eine effiziente Strömung durch die Brennkammer erzielt wird.

Alternativ oder zusätzlich kann die Brennkammer auch ein in Längsrichtung der Brennkammer an den Düsenteil anschließendes Düsenüberschallsegment umfassen. Ein solches Düsenüberschallsegment findet sich auch bei herkömmlichen Brennkammern oder Schubkammern.

Ferner ist gemäß der vorliegenden Erfindung in dem mindestens einen ersten Abschnitt und dem zweiten Abschnitt des Brennkammerkörpers eine Vielzahl von Kühlmittelkanälen angeordnet, die sich in Längsrichtung des Brennkammerkörpers erstrecken. Die Kühlmittelkanäle sind dabei möglichst nah an der Innenseite des Brennkammerkörpers angeordnet, um die von den Verbrennungsgasen erhitzte Innenseite des Brennkammerkörpers ausreichend zu kühlen. Durch die Kühlmittelkanäle kann eine der Treibstoffkomponenten geleitet werden, die sich dabei für die anschließende Verbrennung vorteilhaft erwärmt.

In einer weiteren Ausgestaltungsvariante kann jeder der Kühlmittelkanäle in dem Brennkammerkörper einen Kühlmittelausgang aufweisen. Dabei kann in Umfangsrichtung entlang eines Querschnitts des Brennkammerkörpers neben einem der Kühlmittelausgänge ein weiterer Kühlmittelausgang eines benachbarten Kühlmittelkanals in dem Brennkammerkörper angeordnet sein. Mit anderen Worten bilden die Kühlmittelausgänge (die Kühlmittelkanalausgänge) entlang des Umfangs des Querschnitts des Brennkammerkörpers eine Kette. Diese können in einen umlaufenden Sammelraum (Manifold) münden.

Ferner weist der Brennkammerkörper gemäß der vorliegenden Erfindung eine im Wesentlichen durchgängig gleiche Wandstärke auf. Mit anderen Worten bildet die Außenseite oder Außenwand des Brennkammerkörpers im Bereich des mindestens einen ersten Abschnitts eine Vertiefung oder Einbuchtung.

In einer anderen Ausgestaltungsvariante kann der Brennkammerkörper einstückig gebildet sein. Einstückig gebildet bedeutet hier, dass zumindest die meisten Teile des Brennkammerkörpers, wie zum Beispiel Innenwand, Außenwand und die Kühlmittelkanäle trennende Stege zwischen Innenwand und Außenwand, aus einem zusammenhängenden Material bestehen. Beispielsweise kann der Brennkammerkörper oder die gesamte Brennkammer in einem Schichtbauverfahren (auch als 3D-Druck oder ALM - additive layer manufacturing - bezeichnet) hergestellt werden. Auch können nur Teile des Brennkammerkörpers mit einem Schichtbauverfahren hergestellt werden und auf einem anderweitig hergestellten Abschnitt des Brennkammerkörpers aufgebaut werden. Beim Schichtbauverfahren können auch verschiedene Werkstoffe verwendet werden. Beispielsweise kann an der Innenseite des Brennkammerkörpers ein stärker hitzebeständiger Werkstoff verwendet werden, als dies an einer Außenseite des Brennkammerkörpers der Fall ist.

Gemäß einem zweiten Aspekt zum besseren Verständnis der vorliegenden Offenbarung umfasst ein Raketentriebwerk eine Brennkammer gemäß dem ersten Aspekt oder einer der dazu beschriebenen Ausgestaltungsvarianten.

Gemäß einem dritten Aspekt zum besseren Verständnis der vorliegenden Offenbarung umfasst ein Verfahren zum Herstellen einer Brennkammer gemäß dem ersten Aspekt oder einer seiner Ausgestaltungsvarianten ein Schichtbauverfahren. Im Fall des Vorhandenseins von Kühlmittelkanälen in dem Brennkammerkörper kann bei dem Schichtbauverfahren an Positionen, an denen die Kühlmittelkanäle des Brennkammerkörpers liegen, kein Material durch das Schichtbauverfahren zusammengefügt werden.

Gemäß einem vierten Aspekt zum besseren Verständnis der vorliegenden Offenbarung umfasst ein Computer-lesbarer Datenträger Instruktionen, die, wenn sie auf einem Prozessor ausgeführt werden, eine Maschine dazu veranlassen, das Schichtbauverfahren gemäß dem dritten Aspekt durchzuführen. Bei diesen Instruktionen kann es sich um CAD-Daten handeln oder ähnliche Daten, die die Form der Brennkammer oder des Brennkammerkörpers gemäß dem ersten Aspekt beschreiben oder definieren, insbesondere so, dass eine Maschine den Brennkammerabschnitt und/oder die Brennkammer schichtweise formen kann.

Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt. Bevorzugte Ausführungsformen der Erfindung werden nun anhand der beigefügten schematischen Zeichnungen näher erläutert, wobei
- Figur 1: schematisch eine perspektivische Ansicht einer Brennkammer zeigt;
- Figur 2: schematisch einen Ausschnitt eines Brennkammerkörpers zeigt;
- Figur 3: schematisch einen anderen Ausschnitt eines Brennkammerkörpers zeigt;
- Figur 4: schematisch eine perspektivische Ansicht und eine Aufsicht einer Brennkammer zeigt; und
- Figur 5: schematisch eine perspektivische Ansicht und eine Aufsicht einer anders gestalteten Brennkammer zeigt.

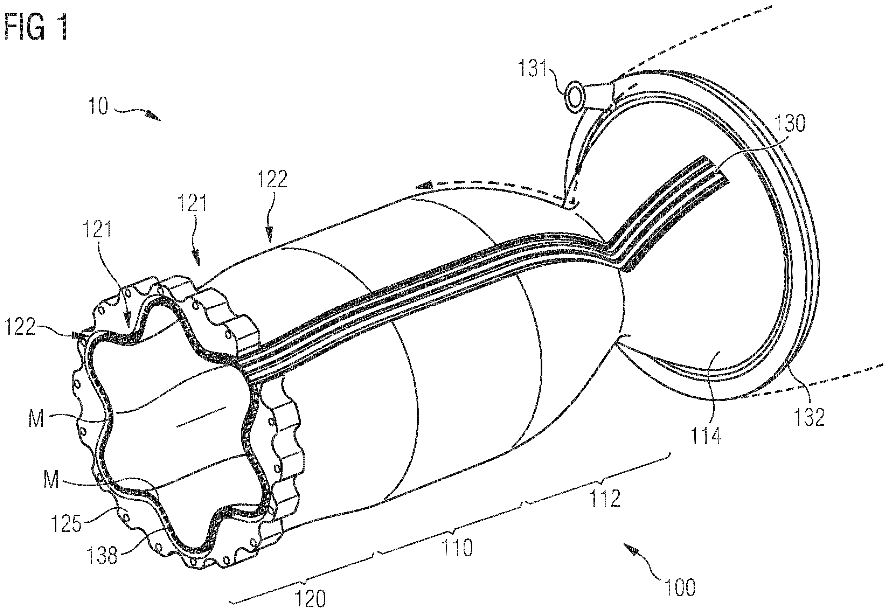

Figur 1 zeigt schematisch eine perspektivische Ansicht einer Brennkammer 100, die beispielsweise in einem Raketentriebwerk 10 verwendet werden kann. Die Düse des Raketentriebwerks 10 ist in Figur 1 rechts lediglich mit gestrichelten Linien angedeutet. Die Brennkammer 100, wie sie in Figur 1 vereinfacht dargestellt ist, umfasst einen Brennkammerkörper 120, der ein Brennkammervolumen umschließt, in dem ein Großteil der Vermischung und Verbrennung der Treibstoffkomponenten stattfindet. Stromabwärts (in Strömungsrichtung der Verbrennungsgase) schließt an den Brennkammerkörper 120 ein optionaler Brennkammerabschnitt 110 sowie ein subsonischer Düsenabschnitt 112 an, in dem die Verbrennungsgase beschleunigt werden, gefolgt von einem Düsenüberschallsegment 114.

Im Bereich des Düsenüberschallsegments 114 befindet sich ein Anschluss 131 für Kühlmittel, der in einen Verteilring 132 (auch Verteilermanifold genannt) mündet. Der Verteilring 132 erstreckt sich in Umfangsrichtung und bildet ein durchgehendes ringförmiges Volumen. In dieses Volumen münden Kühlmittelkanäle 130 bzw. in Strömungsrichtung des Kühlmittels betrachtet (in Figur 1 durch gestrichelten Pfeil dargestellt) beginnen eine Vielzahl von Kühlmittelkanälen 130 in dem Verteilring 132.

In dem Brennkammerabschnitt 110 und dem Brennkammerkörper 120 sind ebenfalls die Kühlmittelkanäle 130 angeordnet, sodass sich die Kühlmittelkanäle 130 des Düsenüberschallsegments 114 bis zum kopfseitigen Ende der Brennkammer 100 (linkes Ende der Brennkammer 100 in Figur 1) fortsetzen. Zur klareren Darstellung sind nur manche der Kühlmittelkanäle 130 in Figur 1 freigelegt dargestellt und auch nur in einem Bereich, der von dem Verteilring 132 beabstandet ist. Selbstverständlich laufen die Kühlmittelkanäle 130 im Bereich des Düsenüberschallsegments 114 bis zu dem Verteilring 132.

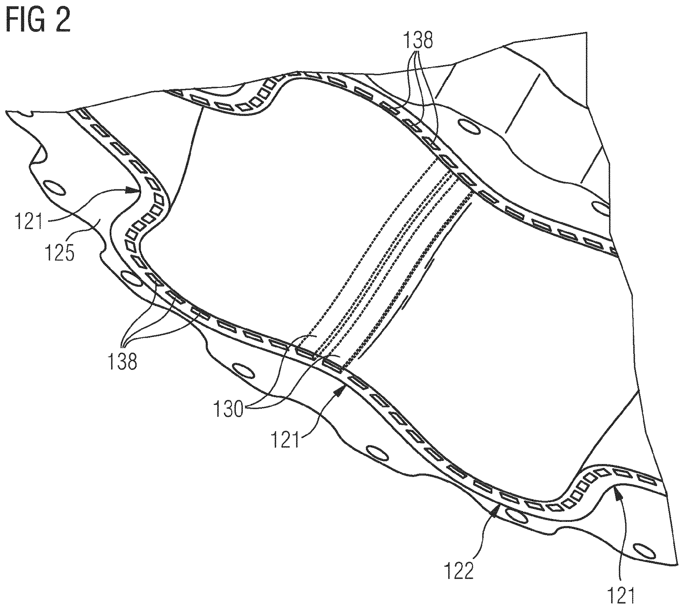

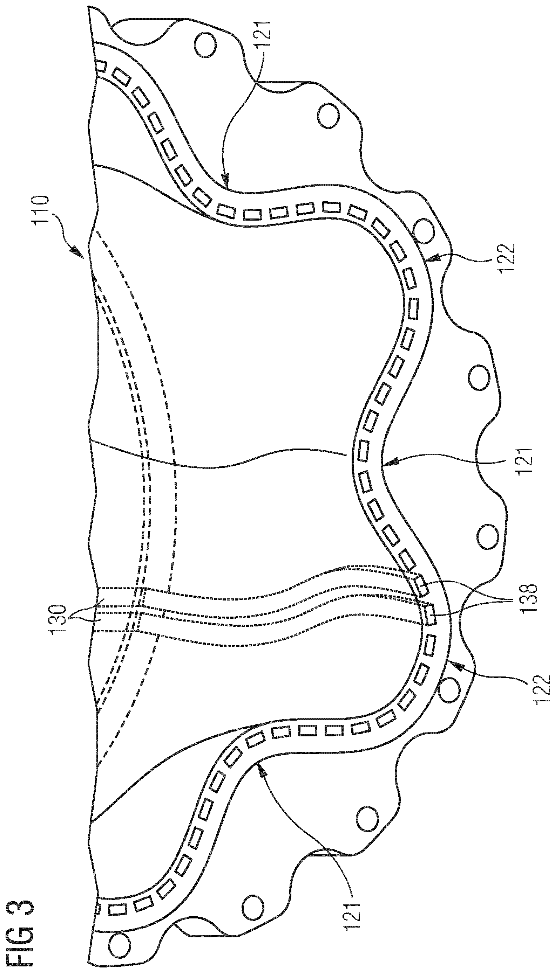

Am in Blickrichtung der Strömungsrichtung der Verbrennungsgase stromaufwärts gelegenen Ende der Brennkammer 100 ist ein Flansch 125 vorgesehen. Dieser Flansch 125 dient dem Anschluss des Brennkammerkopfes (nicht dargestellt). Wie in der Detailansicht in den Figuren 2 und 3 gezeigt ist, befinden sich im Bereich des Flansch 125 eine Vielzahl von Kühlmittelausgängen 138, wobei jeder Kühlmittelkanal 130 in dem Brennkammerkörper 120 einen solchen Kühlmittelausgang 138 aufweist. Die Kühlmittelausgänge 138 sind in Umfangsrichtung entlang eines Querschnitts des Brennkammerkörpers 120 nebeneinander angeordnet. Die Kühlmittelausgänge 138 können in einen nicht dargestellten Verteilring oder Sammelring münden, der entsprechend dem Verteilring 132 am anderen Ende der Brennkammer 100 vorgesehen ist.

Der in Figur 1 zylindrisch dargestellte Brennkammerabschnitt 110 kann jede beliebige Querschnittsform einnehmen, die der effizienten Verbrennung der Treibstoffkomponenten dient. Der Brennkammerabschnitt 110 ist in Figur 1 insbesondere zur Veranschaulichung eines möglichen Grundkörpers der Brennkammer 100 dargestellt. Dieser mögliche (virtuelle) Grundkörper der Brennkammer 100 findet sich zumindest in manchen Bereichen auch in dem Brennkammerkörper 120.

Von diesem Grundkörper abweichend weist der Brennkammerkörper 120 mindestens einen ersten Abschnitt 121 und einen zweiten Abschnitt 122 auf. Diese beiden Abschnitte 121, 122 sind in den Detailansichten der Figuren 2 und 3 deutlich erkennbar. Eine dem Brennkammervolumen zugewandte Innenseite des mindestens einen ersten Abschnitts 121 liegt näher an einem Querschnittszentrum des Brennkammerkörpers 120 als eine Innenseite des zweiten Abschnitts 122 des Brennkammerkörpers 120. In Figur 1 ist ein Brennkammerkörper 120 mit insgesamt sechs ersten Abschnitten 121 gezeigt. Die Anzahl der ersten Abschnitte 121 kann aber beliebig gewählt werden und kann sowohl eine gerade als auch ungerade Anzahl sein.

Die in Figur 1 dargestellten ersten Abschnitte 121 weisen einen minimalen Abstand M (Minimum) zu einem Querschnittszentrum des Brennkammerkörpers 120 auf. Von diesem Minimum M ändert sich der Abstand der Innenseite des mindestens einen ersten Abschnitts 121 zum Querschnittszentrum des Brennkammerkörpers 120 in Längsrichtung und in Umfangsrichtung kontinuierlich bis zu einem Abstand der Innenseite des zweiten Abschnitts 122 des Brennkammerkörpers 120 zum Querschnittszentrum. Dieser Abstand der Innenseite zum Querschnittszentrum vergrößert sich also kontinuierlich. Dadurch wird das Brennkammervolumen in bestimmte Bereiche unterteilt, wobei die ersten Abschnitte 121 eine Verengung darstellen. Diese verengten Bereiche erfüllen eine ähnliche Aufgabe wie Leitbleche, die an einem Einspritzkopf (nicht dargestellt) angeordnet sind. Jedoch wird durch den kontinuierlichen Verlauf der Innenseite des Brennkammerkörpers 120 eine strömungsoptimierte Oberfläche geschaffen.

Je nach Art des Treibstoffs können Schwingungen in dem Brennkammervolumen entstehen, die unterschiedliche Parameter aufweisen. Um den Schwingungen entgegenzuwirken, sind der mindestens eine erste Bereich 121 und der zweite Bereich 122 in Längsrichtung und/oder Umfangsrichtung des Brennkammerkörpers 120 so dimensioniert, dass die ansonsten entstehenden Schwingungen gedämpft werden oder unterdrückt werden.

Die Kühlmittelkanäle 130 sind in Längsrichtung des Brennkammerkörpers 120 betrachtet sowohl durch die ersten Abschnitte 121 als auch den zweiten Abschnitt 122 geführt. Aufgrund der Veränderung der Innenseite zwischen erstem Bereich 121 und zweitem Bereich 122 können die Kühlmittelkanäle 130 auch unterschiedliche Querschnittsformen aufweisen. Beispielsweise können die Kühlmittelkanäle 130 im ersten Bereich 121 in Umfangsrichtung betrachtet breiter ausgestaltet sein, um der zunehmenden Oberfläche (ebenfalls in Umfangsrichtung betrachtet) gerecht zu werden. Vorteilhaft ist es, wenn sich die Querschnittsfläche jedes Kühlmittelkanals 130 von dem düsenseitigen Ende (rechts in Figur 1) bis zu dem kopfseitigen Ende (links in Figur 1) nicht oder nur geringfügig verändert.

Der Brennkammerkörper 120 (oder die gesamte Brennkammer 100) kann in einem Schichtbauverfahren (3D-Druck oder ALM) recht schnell und einfach hergestellt werden kann. Das den mindestens einen ersten Abschnitt 121 und den zweiten Abschnitt 122 bildende Material kann schichtweise aufgetragen werden und die gesamte Brennkammer 100 kann schichtweise hergestellt werden. Sämtliche Kühlmittelkanäle 130 können dabei durch Weglassen eines Materialauftrags und somit Erzeugen eines Hohlraums hergestellt werden.

Durch das Schichtbauverfahren können die Hohlräume, die die Kühlmittelkanäle 130 bildend, in einfacher Weise hergestellt werden. Dadurch lassen sich auch komplexe Strukturen insbesondere im Übergangsbereich zwischen Brennkammerabschnitt 110 und Brennkammerkörper 120 und/oder im Bereich der kontinuierlichen Veränderung der Innenseite des Brennkammerkörpers 120 im Bereich des mindestens einen ersten Abschnitts 121 und zweiten Abschnitts 122 verwirklichen, die mit anderen Herstellerverfahren nicht möglich wären. Somit lassen sich gut zu kühlende und strömungsoptimierte Brennkammerkörper 120 in einem einfachen Verfahren bereitstellen, wobei insbesondere auf eine gute Schwingungsdämpfung geachtet werden kann, unabhängig von einem sich verändernden Verlauf der Kühlmittelkanäle 130.

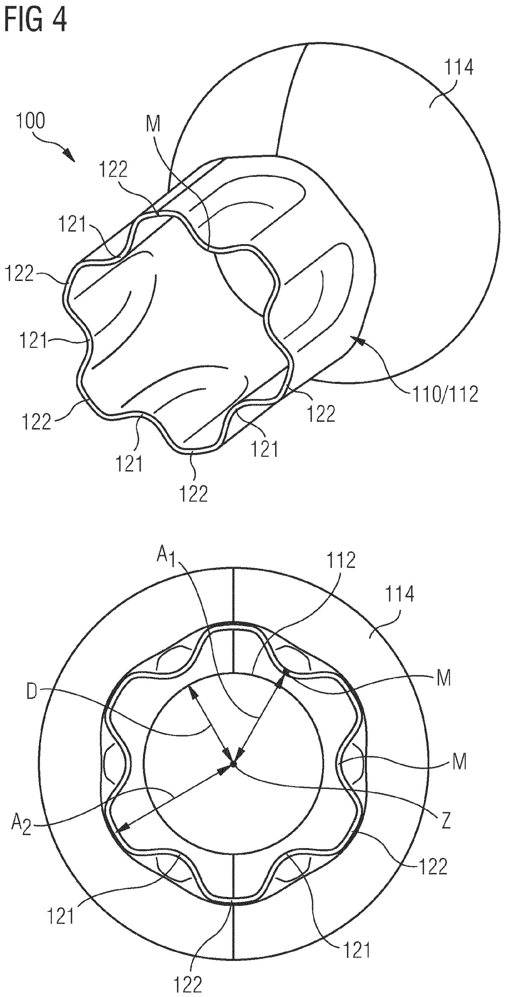

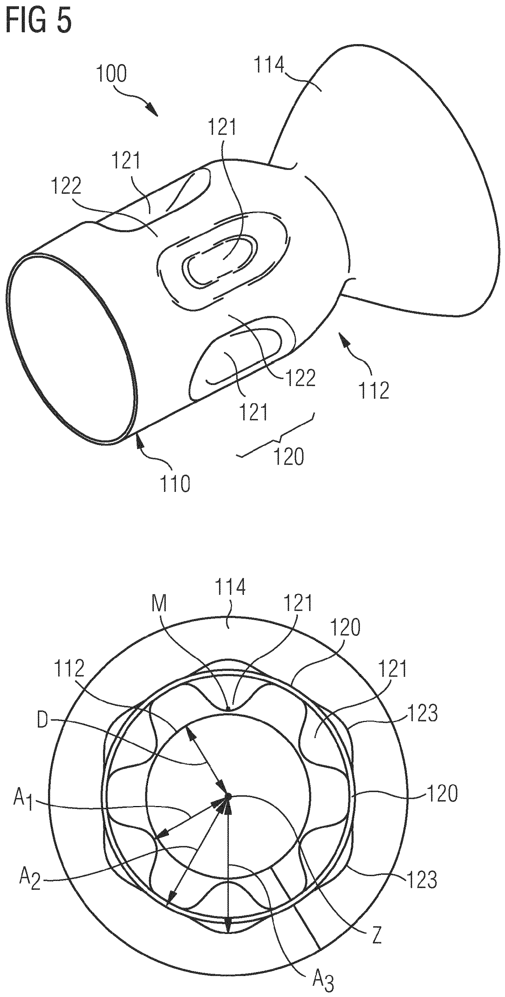

Die Figuren 4 und 5 zeigen schematisch perspektivische Ansichten und Aufsichten zweier Brennkammern 100. In dem Beispiel gemäß Figur 4 sind die ersten Abschnitte 121 des Brennkammerkörpers 120 am kopfseitigen Ende der Brennkammer 100 vorgesehen. Das Minimum M des Abstands A1 der Innenseite des ersten Abschnitts 121 zum Querschnittszentrum Z befindet sich beispielsweise am kopfseitigen Ende der Brennkammer 100. Der Abstand (von A1 beginnen) vergrößert sich kontinuierlich entlang der Längsrichtung und Umfangsrichtung des Brennkammerkörpers 120, bis er den Abstand A2 der Innenseite des zweiten Abschnitts 122 zum Querschnittszentrum Z erreicht. Selbstverständlich kann das Minimum M nicht nur punktuell vorliegen, sondern auch entlang einer Linie (zum Beispiel in Längsrichtung verlaufend) oder auf einer Fläche.

In den Aufsichten der Figuren 4 und 5 (mit Blickrichtung in Längsrichtung der jeweiligen Brennkammer 100) ist ferner zu erkennen, dass sich das Brennkammervolumen im Bereich des Düsenabschnitts 112 verjüngt, insbesondere verjüngt sich der Querschnitt der Brennkammer 100 bis zu dem Düsenabschnittsdurchmesser D.

In dem Beispiel gemäß Figur 5 sind ebenfalls erste Abschnitte 121 vorgesehen, die eine Verkleinerung des Brennkammervolumens bewirken. Diese ersten Abschnitte 121 liegen jedoch in Längsrichtung der Brennkammer 100 betrachtet in einem mittleren Bereich, also zwischen dem kopfseitigen Ende (links in Figur 5) und dem düsenseitigen Ende (rechts in Figur 5) des Brennkammerkörpers 120. Der übrige die ersten Abschnitt 121 umgebende Bereich des Brennkammerkörpers 120 stellt quasi einen Grundkörper in Form des zweiten Abschnitts 122 dar. Im kopfseitigen sowie im düsenseitigen Bereich kann daher auch von einem Brennkammerabschnitt 110 gesprochen werden, der die Form einer üblichen Brennkammer aufweist (hier eine zylindrische Brennkammerform).

Die in den Figuren 4 und 5 dargestellten Anordnungen des mindestens einen ersten Abschnitts 121 sind lediglich beispielhaft. Während in Figur 5 die ersten Abschnitte 121 entlang eines Rings angeordnet sind, können selbstverständlich mehrere erste Abschnitte 121 entlang zweier Ringe in dem Brennkammerkörper 120 angeordnet sein. Dabei können die ersten Abschnitte 121 entlang eines Rings in Umfangsrichtung des Brennkammerkörpers 120 betrachtet verdreht zu den ersten Abschnitten 121 eines weiteren Rings angeordnet sein. Ebenso ist es denkbar, dass sich die ersten Abschnitte nicht entlang der Längsrichtung des Brennkammerkörpers 120 erstrecken, wie dies beispielsweise in den Figuren 4 und 5 der Fall ist. Vielmehr können die ersten Abschnitte 121 auch entlang einer geschwungenen Linie verlaufen. Dadurch lässt sich beispielsweise eine Rotationskomponente in die Strömung der Verbrennungsgase aufnehmen oder auch reduzieren.

Ferner folgt die Außenseite des Brennkammerkörpers 120 wie in den Figuren 4 und 5 dargestellt dem Verlauf der Innenseite sowohl in den ersten Abschnitten 121 als auch den zweiten Abschnitten 122. Dadurch weist die Wand des Brennkammerkörpers 120 überwiegend die gleiche Stärke auf.

Schließlich kann in jeder der hier beschriebenen Ausgestaltungen nicht nur eine Einbuchtung in Form des mindestens einen ersten Abschnitts 121 vorliegen, sondern auch eine Ausbuchtung 123 (nur in Figur 5 dargestellt). Ferner kann die Ausbuchtung 123 auch den zweiten Abschnitt 122 ersetzen. Solch eine oder mehrere Ausbuchtungen ermöglichen, dass im Bereich des Brennkammerkörper 120 und des Brennkammerabschnitts 110 die gleiche Machzahl vorliegt.

## Patentansprüche

1. Brennkammer (100) für ein Raketentriebwerk (10), wobei die Brennkammer (100) umfasst:
- einen Brennkammerkörper (120), der ein Brennkammervolumen umschließt; und
- einen sich in Längsrichtung der Brennkammer (100) verjüngenden Düsenteil (112), der an den Brennkammerkörper (120) anschließt,
wobei der Brennkammerkörper (120) mindestens einen ersten Abschnitt (121) und einen zweiten Abschnitt (122) aufweist,
**dadurch gekennzeichnet, dass**
der Brennkammerkörper (120) eine im Wesentlichen durchgängig gleiche Wandstärke aufweist,
der zweite Abschnitt (122) zumindest einen Teil eines zylindrischen Grundkörpers des Brennkammerkörpers (120) bildet,
eine dem Brennkammervolumen zugewandte Innenseite des mindestens einen ersten Abschnitts (121) näher an einem Querschnittszentrum des Brennkammerkörpers (120) liegt als eine Innenseite des zweiten Abschnitts (122) des Brennkammerkörpers (120),
in dem mindestens einen ersten Abschnitt (121) und dem zweiten Abschnitt (122) des Brennkammerkörpers (120), eine Vielzahl von Kühlmittelkanälen (130) angeordnet ist, die sich in Längsrichtung des Brennkammerkörpers (120) erstrecken und dem Verlauf der Innenseite des mindestens einen ersten Abschnitts (121) und dem zweiten Abschnitt (122) folgen, und
jeder Kühlmittelkanal (130), der dem Verlauf der Innenseite eines des mindestens einen ersten Abschnitts (121) folgt, in Längsrichtung des Brennkammerkörpers (120) auch durch den zweiten Abschnitt (122) führt.

2. Brennkammer (100) gemäß Anspruch 1, wobei sich ein Abstand (A1) der Innenseite des mindestens einen ersten Abschnitts (121) zum Querschnittszentrum (Z) des Brennkammerkörpers (120) in Längsrichtung und/oder in Umfangsrichtung des Brennkammerkörpers (120) von einem Minimum (M) kontinuierlich bis zu einem Abstand (A2) der Innenseite des zweiten Abschnitts (122) des Brennkammerkörpers (120) zum Querschnittszentrum (Z) des Brennkammerkörpers (120) vergrößert.

3. Brennkammer (100) gemäß Anspruch 2, wobei das Minimum (M) des Abstands (A1) der Innenseite des mindestens einen ersten Abschnitts (121) zum Querschnittszentrum (Z) des Brennkammerkörpers (120) entlang einer sich in Längsrichtung und/oder in Umfangsrichtung des Brennkammerkörpers (120) erstreckenden Linie angeordnet ist.

4. Brennkammer (100) gemäß einem der Ansprüche 1 bis 3, wobei mindestens ein Querschnitt des Brennkammerkörpers (120) rotationssymmetrisch ist und das Querschnittszentrum (Z) des Brennkammerkörpers (120) der Drehpunkt der Rotationssymmetrie ist.

5. Brennkammer (100) gemäß einem der Ansprüche 1 bis 4, wobei sich der mindestens eine erste Abschnitt (121) des Brennkammerkörpers (120) in Längsrichtung des Brennkammerkörpers (120) in einem Bereich des Brennkammerkörpers (120) befindet, der ein kopfseitiges Ende des Brennkammerkörpers (120) bildet oder der ein düsenseitiges Ende des Brennkammerkörpers (120) benachbart zu dem Düsenteil (112) bildet oder der einen Mittelbereich zwischen dem kopfseitigen Ende und dem düsenseitigen Ende des Brennkammerkörpers (120) bildet, oder
wobei sich der mindestens eine erste Abschnitt (121) des Brennkammerkörpers (120) in Längsrichtung des Brennkammerkörpers (120) über den gesamten Brennkammerkörper (120) erstreckt.

6. Brennkammer (100) gemäß einem der Ansprüche 1 bis 5, wobei der Brennkammerkörper (120) eine gerade Anzahl von ersten Abschnitten (121) umfasst, und/oder
wobei in Längsrichtung des Brennkammerkörpers (120) mindestens zwei erste Abschnitte (121) in dem Brennkammerkörper (120) angeordnet sind.

7. Brennkammer (100) gemäß einem der Ansprüche 1 bis 6, ferner umfassend:
- einen sich in Längsrichtung der Brennkammer (100) erstreckenden zylindrischen Abschnitt (110).

8. Brennkammer (100) gemäß einem der Ansprüche 1 bis 7, ferner umfassend:
- ein in Längsrichtung der Brennkammer (100) an den Düsenteil (112) anschließendes Düsenüberschallsegment (114).

9. Brennkammer (100) gemäß Anspruch 1, wobei jeder der Kühlmittelkanäle (130) in dem Brennkammerkörper (120) einen Kühlmittelausgang (138) aufweist, und wobei in Umfangsrichtung entlang eines Querschnitts des Brennkammerkörpers (120) neben einem der Kühlmittelausgänge (138) ein weiterer Kühlmittelausgang (138) eines benachbarten Kühlmittelkanals (130) in dem Brennkammerkörper (120) angeordnet ist.

10. Raketentriebwerk (10) mit einer Brennkammer (100) gemäß einem der Ansprüche 1 bis 9.

11. Verfahren zum Herstellen einer Brennkammer (100) gemäß einem der Ansprüche 1 bis 9, wobei die Brennkammer (100) im Schichtbauverfahren aufgebaut wird.

12. Verfahren gemäß Anspruch 11 zum Herstellen einer Brennkammer (100) gemäß Anspruch 8 oder 9, wobei an Positionen, an denen die Kühlmittelkanäle (130) des Brennkammerkörpers (120) liegen, kein Material durch das Schichtbauverfahren zusammengefügt wird.

13. Computer-lesbarer Datenträger, der Instruktionen umfasst, die, wenn sie auf einem Prozessor ausgeführt werden, eine Maschine dazu veranlassen, das Schichtbauverfahren gemäß Anspruch 11 oder 12 durchzuführen.

## Claims

1. A combustion chamber (100) for a rocket engine (10), the combustion chamber (100) comprising:
- a combustion chamber body (120) enclosing a combustion chamber volume; and
- a nozzle part (112) that tapers in the longitudinal direction of the combustion chamber (100) and that adjoins the combustion chamber body (120), wherein the combustion chamber body (120) has at least one first section (121) and a second section (122),
**characterized in that**
the combustion chamber body (120) has a substantially constant wall thickness,
the second section (122) forms at least part of a cylindrical base body of the combustion chamber body (120),
an inner side of the at least one first section (121) facing the combustion chamber volume is closer to a cross-sectional center of the combustion chamber body (120) than an inner side of the second section (122) of the combustion chamber body (120),
in the at least one first section (121) and the second section (122) of the combustion chamber body (120) a plurality of coolant channels (130) is arranged, which extend in the longitudinal direction of the combustion chamber body (120) and follow the course of the inside of the at least one first section (121) and the second section (122), and
each coolant channel (130) that follows the course of the inside of one of the at least one first section (121) also passes through the second section (122) in the longitudinal direction of the combustion chamber body (120).

2. The combustion chamber (100) according to claim 1, wherein a distance (A1) of the inside of the at least one first section (121) from the cross-sectional center (Z) of the combustion chamber body (120) continuously increases in the longitudinal direction and/or in the circumferential direction of the combustion chamber body (120) from a minimum (M) up to a distance (A2) of the inside of the second section (122) of the combustion chamber body (120) from the cross-sectional center (Z) of the combustion chamber body (120).

3. The combustion chamber (100) according to claim 2, wherein the minimum (M) of the distance (A1) of the inside of the at least one first section (121) from the center (Z) of the cross section of the combustion chamber body (120) is arranged along a line extending in the longitudinal direction and/or in the circumferential direction of the combustion chamber body (120).

4. The combustion chamber (100) according to one of claims 1 to 3, wherein at least one cross section of the combustion chamber body (120) is rotationally symmetrical and the cross-sectional center (Z) of the combustion chamber body (120) is the center of rotation of the rotational symmetry.

5. The combustion chamber (100) according to one of claims 1 to 4, wherein the at least one first section (121) of the combustion chamber body (120) is located in the longitudinal direction of the combustion chamber body (120) in a region of the combustion chamber body (120) which forms a head-side end of the combustion chamber body (120) or which forms a nozzle-side end of the combustion chamber body (120) adjacent to the nozzle part (112) or which forms a central region between the head-side end and the nozzle-side end of the combustion chamber body (120), or
wherein the at least one first section (121) of the combustion chamber body (120) extends in the longitudinal direction of the combustion chamber body (120) over the entire combustion chamber body (120).

6. The combustion chamber (100) according to one of claims 1 to 5, wherein the combustion chamber body (120) comprises an even number of first sections (121), and/or
wherein at least two first sections (121) are arranged in the combustion chamber body (120) in the longitudinal direction of the combustion chamber body (120).

7. The combustion chamber (100) according to one of claims 1 to 6, further comprising:
- a cylindrical section (110) extending in the longitudinal direction of the combustion chamber (100).

8. The combustion chamber (100) according to one of claims 1 to 7, further comprising:
- a supersonic nozzle segment (114) adjoining the nozzle part (112) in the longitudinal direction of the combustion chamber (100).

9. The combustion chamber (100) according to claim 1, wherein each of the coolant channels (130) in the combustion chamber body (120) has a coolant outlet (138), and wherein, in the circumferential direction along a cross-section of the combustion chamber body (120), an additional coolant outlet (138) of an adjacent coolant channel (130) in the combustion chamber body (120) is arranged next to one of the coolant outlets (138).

10. A rocket engine (10) having a combustion chamber (100) according to one of claims 1 to 9.

11. A method for producing a combustion chamber (100) according to one of claims 1 to 9, the combustion chamber (100) being built up by a layering manufacturing method.

12. The method according to claim 11 for producing a combustion chamber (100) according to claim 8 or 9, wherein no material is joined by the layering manufacturing method at positions where the coolant channels (130) of the combustion chamber body (120) are located.

13. A computer-readable storage medium comprising instructions that, when executed on a processor, cause a machine to perform the layering manufacturing method according to claim 11 or 12.

## Revendications

1. Chambre de combustion (100) pour un moteur de fusée (10), la chambre de combustion (100) comprenant :
- un corps de chambre de combustion (120) qui renferme un volume de chambre de combustion ; et
- une partie tuyère (112) se rétrécissant dans la direction longitudinale de la chambre de combustion (100), qui se raccorde au corps de chambre de combustion (120),
le corps de chambre de combustion (120) comprenant au moins une première section (121) et une deuxième section (122),
**caractérisée en ce que**
le corps de chambre de combustion (120) a une épaisseur de paroi sensiblement identique d'un bout à l'autre,
la deuxième section (122) forme au moins une partie d'un corps de base cylindrique du corps de chambre de combustion (120),
un côté intérieur, tourné vers le volume de chambre de combustion, de ladite au moins une première section (121) est plus proche d'un centre de coupe transversale du corps de chambre de combustion (120) qu'un côté intérieur de la deuxième section (122) du corps de chambre de combustion (120),
une pluralité de canaux de fluide de refroidissement (130) est disposée dans ladite au moins une première section (121) et la deuxième section (122) du corps de chambre de combustion (120), lesdits canaux s'étendant dans la direction longitudinale du corps de chambre de combustion (120) et suivant le tracé du côté intérieur de ladite au moins une première section (121) et de la deuxième section (122), et
chaque canal de fluide de refroidissement (130) qui suit le tracé du côté intérieur de l'une de ladite au moins une première section (121) passe également à travers la deuxième section (122) dans la direction longitudinale du corps de chambre de combustion (120).

2. Chambre de combustion (100) selon la revendication 1, dans laquelle une distance (A1) entre le côté intérieur de ladite au moins une première section (121) et le centre de coupe transversale (Z) du corps de chambre de combustion (120) augmente de manière continue dans la direction longitudinale et/ou dans la direction circonférentielle du corps de chambre de combustion (120) depuis un minimum (M) jusqu'à une distance (A2) entre le côté intérieur de la deuxième section (122) du corps de chambre de combustion (120) et le centre de coupe transversale (Z) du corps de chambre de combustion (120).

3. Chambre de combustion (100) selon la revendication 2, dans laquelle le minimum (M) de la distance (A1) entre le côté intérieur de ladite au moins une première section (121) et le centre de coupe transversale (Z) du corps de chambre de combustion (120) est disposé le long d'une ligne s'étendant dans la direction longitudinale et/ou dans la direction circonférentielle du corps de chambre de combustion (120).

4. Chambre de combustion (100) selon l'une quelconque des revendications 1 à 3, dans laquelle au moins une coupe transversale du corps de chambre de combustion (120) présente une symétrie de révolution et le centre de coupe transversale (Z) du corps de chambre de combustion (120) est le centre de rotation de la symétrie de révolution.

5. Chambre de combustion (100) selon l'une quelconque des revendications 1 à 4, dans laquelle ladite au moins une première section (121) du corps de chambre de combustion (120) est située, dans la direction longitudinale du corps de chambre de combustion (120), dans une zone du corps de chambre de combustion (120) qui forme une extrémité côté tête du corps de chambre de combustion (120) ou qui forme une extrémité côté tuyère du corps de chambre de combustion (120) adjacente à la partie tuyère (112) ou qui forme une zone centrale entre l'extrémité côté tête et l'extrémité côté tuyère du corps de chambre de combustion (120), ou
dans laquelle ladite au moins une première section (121) du corps de chambre de combustion (120) s'étend dans la direction longitudinale du corps de chambre de combustion (120) sur l'ensemble du corps de chambre de combustion (120).

6. Chambre de combustion (100) selon l'une quelconque des revendications 1 à 5, dans laquelle le corps de chambre de combustion (120) comprend un nombre pair de premières sections (121), et/ou
dans laquelle au moins deux premières sections (121) sont disposées dans le corps de chambre de combustion (120) dans la direction longitudinale du corps de chambre de combustion (120).

7. Chambre de combustion (100) selon l'une quelconque des revendications 1 à 6, comprenant en outre :
- une section cylindrique (110) s'étendant dans la direction longitudinale de la chambre de combustion (100).

8. Chambre de combustion (100) selon l'une quelconque des revendications 1 à 7, comprenant en outre :
- un segment supersonique de tuyère (114) se raccordant à la partie tuyère (112) dans la direction longitudinale de la chambre de combustion (100).

9. Chambre de combustion (100) selon la revendication 1, dans laquelle chacun des canaux de fluide de refroidissement (130) dans le corps de chambre de combustion (120) comprend une sortie de fluide de refroidissement (138), et dans laquelle, dans la direction circonférentielle le long d'une coupe transversale du corps de chambre de combustion (120), une autre sortie de fluide de refroidissement (138) d'un canal de fluide de refroidissement adjacent (130) est disposée dans le corps de chambre de combustion (120) à côté de l'une des sorties de fluide de refroidissement (138).

10. Moteur de fusée (10) doté d'une chambre de combustion (100) selon l'une quelconque des revendications 1 à 9.

11. Procédé de fabrication d'une chambre de combustion (100) selon l'une quelconque des revendications 1 à 9, dans lequel la chambre de combustion (100) est construite par un procédé de construction par couches.

12. Procédé selon la revendication 11 de fabrication d'une chambre de combustion (100) selon la revendication 8 ou 9, dans lequel aucun matériau n'est assemblé par le procédé de construction par couches aux positions où se trouvent les canaux de fluide de refroidissement (130) du corps de chambre de combustion (120).

13. Support de données lisible par ordinateur comprenant des instructions qui, lorsqu'elles sont exécutées sur un processeur, amènent une machine à exécuter le procédé de construction par couches selon la revendication 11 ou 12.
